(19) Europäisches Patentamt
European Patent Office
Office européen des brevets

(11) **EP 1 984 199 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(21) Anmeldenummer: **07704224.0**

(22) Anmeldetag: **30.01.2007**

(51) Int Cl.:
**B60K 6/00** (2007.10)

(86) Internationale Anmeldenummer:
**PCT/EP2007/050871**

(87) Internationale Veröffentlichungsnummer:
**WO 2007/090761 (16.08.2007 Gazette 2007/33)**

(54) **VERFAHREN ZUM BETREIBEN EINER ANTRIEBSVORRICHTUNG EINES HYBRIDFAHRZEUGS**

METHOD FOR OPERATING A DRIVE APPARATUS OF A HYBRID VEHICLE

PROCÉDÉ DE FONCTIONNEMENT D'UN GROUPE PROPULSEUR D'UN VÉHICULE HYBRIDE

(84) Benannte Vertragsstaaten:
**DE FR GB IT**

(30) Priorität: **10.02.2006 DE 102006006107**

(43) Veröffentlichungstag der Anmeldung:
**29.10.2008 Patentblatt 2008/44**

(73) Patentinhaber: **Robert Bosch GmbH
70442 Stuttgart (DE)**

(72) Erfinder: **FALKENSTEIN, Jens-Werner
73434 Aalen (DE)**

(56) Entgegenhaltungen:
**EP-A- 1 270 301       WO-A-2004/067949
US-A1- 2002 170 758   US-A1- 2003 062 206
US-B1- 6 806 667**

**Beschreibung**

Die Erfindung betrifft ein Verfahren zum Betreiben einer Antriebsvorrichtung eines Hybridfahrzeugs, insbesondere eines Hybridkraftfahrzeugs, mit mindestens einer Verbrennungskraftmaschine und mindestens einer elektrischen Maschine, wobei sich die Drehmomente von Verbrennungskraftmaschine und elektrischer Maschine addieren.

Verfahren der eingangs genannten Art sind bekannt. Um Kraftstoffverbrauch und Emissionen zu reduzieren, wird eine optimale Aufteilung des vom Fahrer angeforderten Antriebsmoment auf die Verbrennungskraftmaschine und die elektrische Maschine angestrebt. Dabei wird die Aufteilung des Antriebsmoments so vorgenommen, dass die Verbrennungskraftmaschine im Bereich günstiger Wirkungsgrade betrieben und ein Laden eines zur elektrischen Maschine gehörenden elektrischen Speichers ermöglicht wird. Bei kleinen Fahrzeuggeschwindigkeiten soll dagegen die Verbrennungskraftmaschine abgeschaltet und das gewünschte Drehmoment allein durch die elektrische Maschine erbracht werden. Weiterhin kann beim Bremsen des Fahrzeugs die Bremsenergie durch Rekuperation zum Laden des elektrischen Speichers genutzt werden. Moderne Otto-Motoren mit Saugrohreinspritzung besitzen meist eine elektronische Drosselklappe zur Luftmassenstromregulierung. Dabei ist das Fahrpedal mechanisch von der Drosselklappe entkoppelt. Die endliche Einstellgeschwindigkeit des Drosselklappenstellgliedes und dynamische Füllungseffekte im Saugrohr lassen eine hochdynamische Einstellung eines vorgegebenen Luftmassenstroms und des dadurch erzeugten Verbrennungskraftmaschinendrehmomentes nicht zu. Elektrische Maschinen weisen dagegen eine sehr viel höhere Dynamik des Ansprechverhaltens auf. Fordert der Fahrer ein erhöhtes Antriebsmoment, und gelangt dabei die Verbrennungskraftmaschine in Bereiche günstiger Wirkungsgrade, so wird die elektrische Maschine meistens so gesteuert, dass sie stärker generatorisch arbeitet. Dabei können die Maschinen so angesteuert werden, dass das von der generatorisch betriebenen Elektromaschine kommende betragsmäßig erhöhte negative Moment durch ein erhöhtes Drehmoment der Verbrennungskraftmaschine kompensiert wird. Dadurch, dass die elektrische Maschine im Vergleich zur Verbrennungskraftmaschine ein hochdynamisches Ansprechverhalten aufweist, geht das Antriebs-Ist-Moment des Fahrzeugs zunächst zurück, bevor es sich an das vom Fahrer angeforderte Moment annähert. Dies wirkt sich negativ auf die Fahrbarkeit und den Komfort aus. Diese Unterschwinger können unter Umständen auch unerwünschte Schwingungen im Antriebsstrang anregen. Um den Unterschwinger zu vermeiden wäre es möglich, der elektrischen Maschine zusätzlich die Differenz aus Verbrennungskraftmaschinen-Soll- und Ist-Moment aufzuschalten, um den verzögerten Momentenaufbau der Verbrennungskraftmaschine auszugleichen. Bei einer dynamischen Fahrweise, also bei häufig wechselnden Antriebsmomentanforderungen, würde die elektrische Maschine hochdynamisch belastet werden. Damit verbunden wäre eine hohe Dynamik der elektrischen Leistungsanforderungen an den mit der Elektromaschine verbundenen Energiespeicher, wodurch ein hoher Energieumsatz im Energiespeicher entstehen und seine Lebensdauer reduziert werden würde. Daneben führen häufige zyklische Lade- und Entladevorgänge zu hohen Umwandlungsverlusten, was zu einer Verschlechterung des Gesamtwirkungsgrades führt.

Weiterhin ist ein Verfahren zum Betreiben der Antriebsvorrichtung eines Hybridfahrzeugs aus der DE 102 01 264 A1 bekannt. Dabei wird bei einer negativen Antriebsmomentanforderung die Antriebseinheit und ein Bremssystem des Hybridfahrzeugs verbrauchsoptimiert angesteuert. Bei dem Verfahren wird darauf geachtet, die verfügbare Energie des Hybridkraftfahrzeugs optimal zu nutzen. Insbesondere kann durch eine Rückgewinnung von Bremsenergie durch Rekuperation diese in das elektrische Bordnetz gespeist und dadurch ein Kraftstoffverbrauch der Verbrennungskraftmaschine gesenkt werden.

Aus der EP 1 270 301 ist

Verfahren nach dem Oberbegriff des Anspruchs 1 bzw. eine Vorrichtung nach dem Oberbegriff des Anspruchs 7 bekannt. Der Erfindung liegt die Aufgabe eine durch die Trägheit in der Momentenansteuerung der liegt die Aufgabe Verbrennungskraftmaschine bewirkte verzögerte Momentenänderung, zum Beispiel infolge der Saugrohrdynamik oder infolge eines "Turbolochs" zumindest teilweise zu kompensieren und Unterschwinger beim Beschleunigungsvorgang zu vermeiden. Dadurch kann der Fahrer ein erwartetes, reproduzierbares Antriebsmoment erhalten. beim Beschleunigungsvorgang zu vermeiden.

Diese Aufgabe wird durch die Merkmale des Anspruchs 1 bzw des Anspruchs 7 gelöst.

In einer Weiterbildung der Erfindung wird der erlaubte Ist-Drehmomentbereich so vorgegeben, dass Schwingungsanregungen eines Antriebsstrangs des Hybridfahrzeugs vermieden werden. Dabei soll verhindert werden, dass durch das hochdynamische Ansprechverhalten der elektrischen Maschine bei einer Beschleunigungsanforderung des Fahrers zunächst das Antriebsdrehmoment verringert wird, und zu einem so genannten Unterschwinger führt, der unerwünschte Schwingungsanregungen im Antriebsstrang erzeugen kann. Der erlaubte Antriebs-Ist-Drehmomentbereich wird daher so vorgegeben, dass eine Antriebsdrehmomentänderung nur in die vom Fahrer vorgegebene gewünschte "Richtung" möglich ist.

Weiterhin ist es vorteilhaft, wenn die Leistungen der elektrischen Maschine begrenzt vorgegeben wird. Dadurch werden die im Betrieb entstehenden Umwandlungsverluste der elektrischen Maschine und der ihr zugehörigen Komponenten, insbesondere eines elektrischen Speichers, verringert.

Vorteilhafterweise wird mindestens eine Bereichsgrenze des erlaubten Ist-Drehmomentbereichs in Abhängigkeit der begrenzt vorgegebenen Leistung der elektrischen Maschine beeinflusst, um die genannten Umwandlungsverluste nicht zu überschreiten.

Nach einer Weiterbildung der Erfindung ist der den erlaubten Bereich für das Antriebs-Ist-Drehmoment bestimmende Parameter zum Beispiel vom Tempomat beziehungsweise vom Abstandsregeltempomat abhängig. Weiterhin kann der erlaubte Antriebs-Ist-Drehmomentbereich auch von der Geschwindigkeit und/oder der Drehzahl abhängig sein. So kann der Fahrer bei unterschiedlichen Geschwindigkeiten beziehungsweise Drehzahlen ein reproduzierbares Antriebsdrehmoment erwarten. Außerdem ist es auch denkbar, ein Signal eines ESP-ASR-ABS-Systems als Parameter für den erlaubten Ist-Drehmomentbereich zu verwenden oder je nach Fahrer mehr oder weniger Dynamik zu ermöglichen.

Die folgenden Zeichnungen sollen die Erfindung anhand zweier Ausführungsbeispiele veranschaulichen. Dabei zeigen

Figur 1      ein die Erfindung erläuterndes Simulationsmodell für die Drehmomentaufteilung beim parallelhybriden Antriebsstrang,

Figur 2      ein Simulationsmodell eines Ausführungsbeispiels der Erfindung mit Begrenzung des erlaubten Bereichs durch absolute Grenzen,

Figur 3      die Reaktion der absoluten Grenzen sowie des Summen-Ist-Moments auf einen Sprung im Summen-Soll-Moment,

Figur 4      die Reaktion des Elektromaschinen-Ist-Moments auf einen Sprung im unbegrenzten Elektromaschinen-Soll-Moment, und

Figur 5      ein Simulationsmodell eines Ausführungsbeispiels der Erfindung mit Begrenzung des erlaubten Bereichs durch Grenzen für den Gradienten des Summen-Ist-Moments.

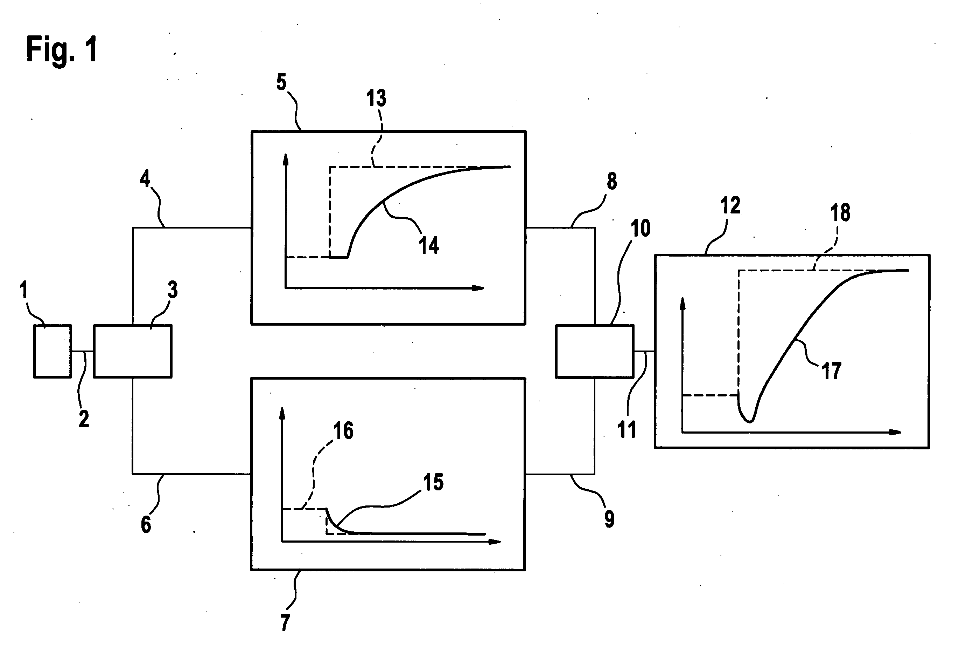

Figur 1 zeigt ein die Erfindung verdeutlichendes Simulationsmodell für die Drehmomentaufteilung bei einem parallelhybriden Antriebsstrang, wobei ein Element 1, hier zum Beispiel ein Sensor zur Fahrerwunscherkennung, ein Signal, insbesondere ein Antriebs-Soll-Drehmoment, über eine Verbindung 2 an ein Steuergerät 3 der Antriebsvorrichtung eines Hybridfahrzeugs leitet, von dem aus eine Verbindung 4 zur einer Verbrennungskraftmaschine 5, deren Verhalten bei einer Drehmomentänderung durch ein Diagramm charakterisiert wird, und eine Verbindung 6 zu einer elektrischen Maschine 7, deren Verhalten bei einer Drehmomentänderung ebenfalls durch ein Diagramm charakterisiert wird, führt, wobei von der Verbrennungskraftmaschine 5 und der elektrischen Maschine 7 jeweils eine Verbindung 8, 9 zu einem Addierer 10 führen, in dem die Drehmomente der Verbrennungskraftmaschine 5 und der elektrischen Maschine 7 summiert werden und das eine Verbindung 11 zu einem Element 12 aufweist, welches das Verhalten des Gesamtantriebsstrangs ebenfalls durch ein Diagramm kennzeichnet. Fordert der Fahrer über die Stellung eines Bedienelementes, insbesondere eines Fahrpedals, ein bestimmtes Antriebsdrehmoment an, so wird dieses von den Sensoren in Element 1 erkannt und an das Steuergerät 3 weitergegeben, welches das gewünschte Drehmoment auf die Verbrennungskraftmaschine 5 und die elektrische Maschine 7 verteilt, wobei, wenn die Verbrennungskraftmaschine in einem Bereich günstiger Wirkungsgrade gelangt, die elektrische Maschine in einen stärker generatorischen Betrieb gesteuert wird. Das charakterisierende Diagramm der Verbrennungskraftmaschine zeigt zwei Drehmomentkurven über die Zeit aufgetragen, wobei die eine Kurve das Verbrennungskraftmaschinen-Soll-Moment 13 mit einem Sprung zu einem höheren Drehmoment beschreibt, und die andere Kurve das Verbrennungskraftmaschinen-Ist-Moment 14. Aufgrund der Trägheit in der Momentenansteuerung der Verbrennungskraftmaschine 5 reagiert das Verbrennungskraftmaschinen-Ist-Moment 14 zeitverzögert und nähert sich erst dann asymptotisch an das Verbrennungskraftmaschinen-Soll-Moment 13 an.

Das in dem charakterisierenden Diagramm der elektrischen Maschine 7 dargestellte hochdynamische Ansprechverhalten der elektrischen Maschine 7 bewirkt ein schnelles asymptotisches Annähern des elektrischen Maschinen-Ist-Moments 15 an einen Sprung im elektrischen Maschinen-Soll-Moment 16.

Die Summierung der Ist-Momente von Verbrennungskraftmaschine 5 und elektrischer Maschine 7 bewirkt das in Element 12 dargestellte Verhalten des Gesamtantriebstrangs. Die Summe aus Verbrennungskraftmaschinen-Soll-Moment 13 und elektrischem Maschinen-Soll-Moment 16 entspricht dem vom Fahrer angeforderten Soll-Drehmoment 18. Bei der Erhöhung des vom Fahrer angeforderten Soll-Drehmoments 18 gelangt der Verbrennungskraftmaschine 5 in einen Bereich günstigerer Wirkungsgrade und die elektrische Maschine 7 stärker in den generatorischen Betrieb, wobei sich die Ladeleistung für einen daran angeschlossenen elektrischen Speicher erhöht. Um die höhere Last der elektrischen Maschine 7 zu kompensieren, springt das Verbrennungskraftmaschinen-Soll-Drehmoment 13 auf einen höheren Wert. Durch das hochdynamische Ansprechverhalten der elektrischen Maschine 7 kommt es dabei zu einem so genannten Unterschwinger des Antriebs-Ist-Drehmoments 17, welches zunächst abnimmt und sich erst dann asymptotisch an das Antriebs-Soll-Moment 18 annähert.

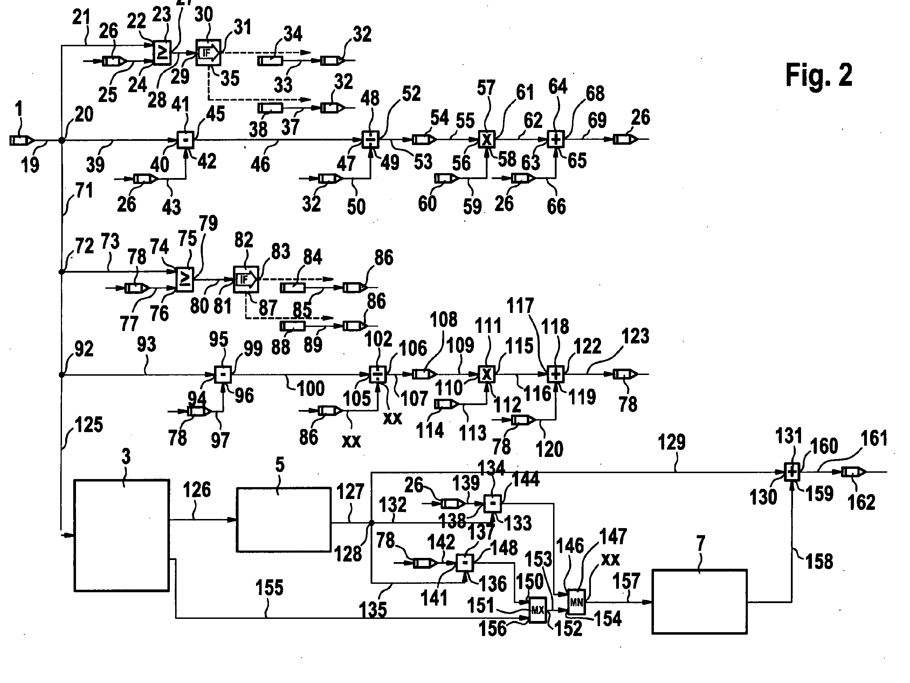

Figur 2 zeigt ein Ausführungsbeispiel der Erfindung am Beispiel eines Parallelhybriden, wobei der erlaubte Antriebs-Ist-Drehmomentbereich durch absolute Grenzen (trqLimHi und trqLimLo), die sich mittels PT1-Verhaltens aus dem Antriebs-Soll-Drehmoment 18 ergeben, begrenzt wird. Dargestellt ist eine Berechnungsvorschrift, die im Sinne eines Abtastsystems zu einzelnen Abtastschritten zyklisch abgearbeitet wird. Dabei werden einige in einem vorherigen Abtastschritt berechnete und dann abgespeicherte Werte benutzt, um für den aktuellen Abtastschritt gültige Werte zu berechnen. Dargestellt ist das Element 1 aus Figur 1, welches ein vom Fahrer gewünschtes Antriebs-Soll-Drehmoment 18 (trqDes) im oberen Bereich der Figur 2 über eine Verbindung 19 zu einer Verzweigung 20 leitet, von der eine Verbindung 21 zu einem Eingang 22 eines Operators 23 führt, der einen Größer/Gleich-Vergleich von zwei Werte durchführt und als Ausgangsgröße wahr oder falsch weitergibt. Über eine zweiten Eingang 24 des Operators 23 erhält dieser über eine über eine Verbindung 25 als zweiten Wert einen im vorherigen Abtastschritt berechneten oberen Grenzwert 26 (trqLimHi) für den erlaubten Bereich des Antriebs-Ist-Drehmomentes 17. Von einem Ausgang 27 des Operators 23 geht eine Verbindung 28 zu einem Eingang 29 der IF-Schaltung 30, welche einen Ausgang 31 aufweist, dem eine Zeitkonstante 32 (TPT1Hi) zugeordnet ist, die über eine Verbindung 33 von einem Wert 34 (TPT1_Fast) bestimmt wird, und einem Ausgang 35, dem wiederum die Zeitkonstante 32 (TPT1Hi) zugeordnet ist, die über eine Verbindung 37 von einem Wert 38 (TPT1_Slow) bestimmt wird. Je nachdem, ob der vom Operator 23 kommende Wert wahr oder falsch ist, beziehungsweise ob das Antriebs-Soll-Drehmoment 18 größer/gleich oder kleiner als die obere Grenze 26 ist, wird durch die IF-Schaltung 30 der Zeitkonstante 32 (TPT1 Hi) ein anderer Wert zugeordnet.

Von der Verzweigung 20 führt eine weitere Verbindung 39 zu einem Eingang 40 eines Subtrahierers 41, der einen zweiten Eingang 42 aufweist, dem über eine Verbindung 43 der im vorherigen Abtastschritt berechnete obere Grenzwert 26 (trqLimHi) als Subtrahend zugeordnet ist. Von einem Ausgang 45 des Subtrahierers 41 führt eine Verbindung 46 zu einem Eingang 47 eines Dividierers 48, dem an einem weiteren Eingang 49 über eine Verbindung 50 die zuvor berechnete Zeitkonstante 32 (TPT1Hi) als Divisor zugeordnet ist. Von einem Ausgang 52 des Dividierers 48 wird eine Ausgangsgröße über eine Verbindung 53 zu einem Element 54 geführt, von dem eine Verbindung 55 zu einem Eingang 56 eines Multiplikators 57 führt, welchem an seinem Eingang 58 über eine Verbindung 59 eine weitere Größe 60 (dT) zugeordnet ist. Der Wert der weiteren Größe 60 (dT) entspricht der Abtastzeit (Abtastperiodenduer, Zeit zwischen zwei Abtastschritten).

Von einem Ausgang 61 führt eine Verbindung 62 zu einem Eingang 63 eines Addierers 64, dem an einem weiteren Eingang 65 über eine Verbindung 66 der im vorherigen Abtastschritt berechnete (und danach abgespeicherte) obere Grenzwert 26 (trqLimHi) zugeordnet ist und der an einem Ausgang 68 über die Verbindung 69 den für den aktuellen Abtastschritt berechneten oberen Grenzwert 26 (trqLimHi) ausgibt. Die dargestellte Berechnungsvorschrift entspricht der Realisierung eines Verzögerungsgliedes erster Ordnung als Abtastsystem, in kontinuierlicher Betrachtungsweise gilt für den oberen Grenzwert 26 (trqLimHi):

$$TPT1Hi \cdot d(trqLimHi)/dt + trqLimHi = trqDes$$

Die Zeitkonstante TPT1Hi wird dabei bei positiven bzw. negativen Gradient von trqLimHi von der IF-Schaltung unterschiedlich gewählt, wobei gilt:

TPT1 Hi = TPT1_Fast falls trqDes $\geq$ trqLimHi
TPT1 Hi = TPT1_Slow falls trqDes < trqLimHi.

Mit TPT1_Slow > TPT1_Fast wird ein schneller Anstieg und ein langsamer Abfall der oberen Grenze (trqLimHi) erzielt. Die untere Grenze verhält sich umgekehrt mit schnellem Abfall und langsamen Anstieg. Eine Parametrierung abhängig vom Betriebszustand des Antriebsstranges ist dabei vorteilhaft.

Im mittleren Teil der Figur 2 ist eine Berechnungsvorschrift zur Ermittlung einer unteren Grenze 78 (trqLimLo) dargestellt. Die Berechnungsvorschrift gleicht der der oberen Grenze 26 (trqLimHi), wobei die dargestellten Elemente, welche die gleiche Funktion haben mit den gleichen Bezugszeichen versehen sind.

Die Berechnungsvorschriften unterscheiden sich dadurch, dass die Werte 38 (TPT1_Slow) und 34 (TPT1_Fast) der Zeitkonstante 86 (TPT1Lo), wie oben erwähnt, umgekehrt gewählt werden:

TPT1 Lo = TPT1_Slow falls trqDes $\geq$ trqLimLo
TPT1 Lo = TPT1_Fast falls trqDes < trqLimLo.

Wobei der Teil zur Bestimmung der Zeitkonstante 86 mit einer Verzweigung 72 verbunden ist, welche eine Verbindung 71 zu der Verzweigung 20 aufweist, und eine weitere Verbindung 91 zu einer Verzweigung 92, von der eine Verbindung 93 zur Berechnung der unteren Grenze 78 (trqLimLo) führt.

Eine weitere Verbindung 125 führt von der Verzweigung 92 zu dem aus Figur 1 bekannten Steuergerät 3, von dem eine Verbindung 126 zu der Verbrennungskraftmaschine 5 führt. Diese leitet über eine Verbindung 127 zu einer Verzweigung 128 das VerbrennungskraftMaschinen-Ist-Moment 14, von der eine Verbindung 129 zu einem Eingang 130 eines Addierers 131, und eine Verbindung 132 zu einem Eingang 133 eines Subtrahierers 134, und eine Verbindung 135 zu einem Eingang 136 eines Subtrahierers 137 führt, wobei durch einen weiteren Eingang 138 des Subtrahierers 134 über eine Verbindung 139 der im oberen Bereich für den aktuellen Abtastschritt berechnete Wert für die obere Grenze 26 (trqLimHi) als Minuend, und an einem Eingang 141 des Subtrahierers 137 über eine Verbindung 142 der im mittleren Bereich der Figur 2 für den aktuellen Abtastschritt berechnete Wert für die untere Grenze 78 (trqLimLo) ebenfalls als Minuend eingebracht wird.

Von einem Ausgang 144 des Subtrahierers 134 führt eine Verbindung 145 zu einem Eingang 146 des Elements 147, welches zwei Werte miteinander vergleicht und den kleineren Wert weiterleitet. Von einem Ausgang 148 des Subtrahierers 137 führt eine Verbindung 149 zu einem Eingang 150 des Elementes 151, welches zwei Werte miteinander vergleicht und den größeren Wert über eine Verbindung 153 zu einem Eingang 154 des Elements 147 weiterleitet. Außerdem wird über eine Verbindung 155 von dem Steuergerät 3 an einem Eingang 156 des Elements 151 das Soll-Drehmoment der elektrischen Maschine 7 eingebracht. So ergeben sich aus den Grenzen 26 und 78 durch Subtraktion des Verbrennungskraftmaschinen-Ist-Moments Grenzen für das Soll-Drehmoment 16 der elektrischen Maschine 7.

Weiterhin führt eine Verbindung 157 zu der elektrischen Maschine 7, von der eine weitere Verbindung 158 zu einem Eingang 159 des Addierers 131 führt, in dem die Drehmomente der Antriebseinheiten zu dem am Ausgang 160 vorliegenden Antriebs-Ist-Drehmoment 162 addiert werden.

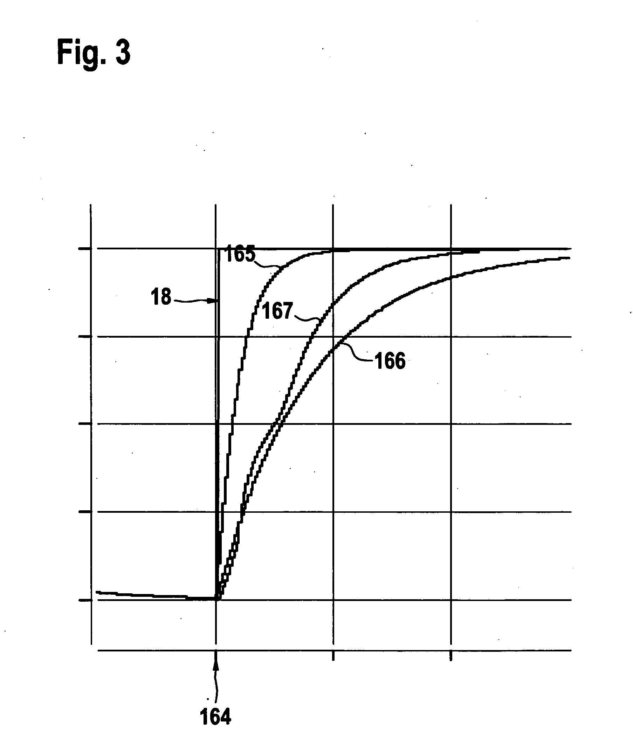

Figur 3 zeigt in einem Diagramm die Reaktion der aus Figur 2 ermittelten Grenzen für den erlaubten Bereich des Antriebs-Ist-Drehmoments 162 auf einen Sprung im Antriebs-Soll-Drehmoment 18, wobei auf der Koordinate das Drehmoment über die Zeit (Abszisse) aufgetragen ist. In das Diagramm eingetragen sind vier Kurven, wobei eine Kurve das Antriebs-Soll-Drehmoment 18 darstellt, und zunächst auf einem konstanten Niveau parallel zur Abszisse verläuft, zu einem Zeitpunkt 164 fast senkrecht/parallel zur Ordinate auf einen höheren Wert ansteigt, um dort wieder parallel zur Abszisse auf einen konstanten Wert zu verlaufen. Eine weitere Kurve 165 stellt die obere Grenze 26 dar und verläuft zunächst parallel zum Antriebs-Soll-Drehmoment 18, steigt ab dem Zeitpunkt 164 steil an und nähert sich anschließend asymptotisch an das Antriebs-Soll-Drehmoment 18 an. Eine dritte Kurve 166, welche die untere Grenze 78 für den erlaubten Bereich des Antriebs-Ist-Drehmoments 162 vorgibt, verläuft zunächst auf demselben Wert wie das Antriebs-Soll-Drehmoment 18 und die Kurve 165, steigt ab dem Zeitpunkt 164 steil an, bleibt dabei aber deutlich unterhalb der Kurve 165 und nähert sich sehr viel langsamer an das Antriebs-Soll-Drehmoment 18 an.

Die vierte Kurve 167, welche das Antriebs-Ist-Drehmoment 162 wiedergibt, steigt ab dem Zeitpunkt 164 steil an, bleibt dabei aber zunächst unterhalb der Kurve 166, schneidet diese aber im weiteren Verlauf und bleibt zwischen den Kurven 165 und 166 und nähert sich dabei ebenfalls asymptotisch an das Antriebs-Soll-Drehmoment 18 an. Ändert sich also das Antriebs-Soll-Drehmoment 18, zum Beispiel wenn der Fahrer das Fahrpedal betätigt, so werden zunächst obere (Kurve 165) und untere (Kurve 166) Grenze des erlaubten Antriebs-Ist-Drehmomentbereichs gemäß dem Ausführungsbeispiel aus Figur 2 berechnet. Das Antriebs-Ist-Drehmoment 162 folgt zunächst der unteren Grenze (Kurve 166), wobei sich durch das PT1-Verhalten bei der Momentenanregelung der elektrischen Maschine 7 eine geringe, unkritische Abweichung von der unteren Grenze (Kurve 166) ergibt. Nachdem das Antriebs-Ist-Drehmoment 162 sich zwischen oberer Grenze 26 und unterer Grenze 78 befindet, also innerhalb des erlaubten Bereichs, erfolgt kein zusätzlicher Eingriff in das Drehmoment der elektrischen Maschine 7, wodurch die von dem Steuergerät 3 aus Figur 2 vorgegebene elektrische Leistung eingehalten wird, was sich günstig auf den Energiespeicher auswirkt.

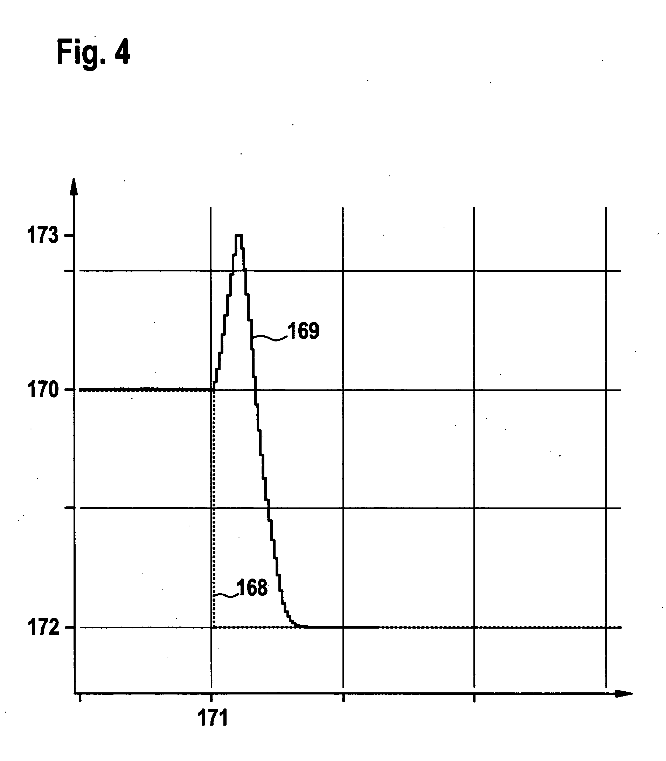

Der Eingriff in das Drehmoment der elektrischen Maschine 7 wird in einem Diagramm in Figur 4 dargestellt. Dabei sind ein von dem Steuergerät 3 aus Figur 2 vorgegebenes Soll-Drehmoment 168 und ein Ist-Drehmoment 169 der elektrischen Maschine über die Zeit aufgetragen. Zunächst verlaufen Soll- und Ist-Drehmoment 168, 169 auf einem konstanten Niveau 170. Zu einem Zeitpunkt 171 springt das Soll-Drehmoment auf ein niedrigeres Niveau 172. Das Ist-Drehmoment 169 der elektrischen Maschine steigt zunächst steil auf ein höheres Niveau 173 an und fällt anschließend steil ab, um sich dann dem Soll-Drehmoment 168 asymptotisch anzunähern. Bei einer Erhöhung des Antriebs-Soll-Drehmoments 18 fällt, wie bereits beschrieben, das von dem Steuergerät 3 aus Figur 2 vorgegebene Soll-Drehmoment 168 der elektrischen Maschine auf einen niedrigen Wert, damit die elektrische Maschine stärker generatorisch arbeitet. Um aber nicht den erlaubten Antriebs-Ist-Drehmomentbereich zu verlassen, greift die Steuerung gemäß dem Ausführungsbeispiel in Figur 2 in das Drehmoment der elektrischen Maschine ein, sodass der verzögerte Drehmomentaufbau der Verbrennungskraftmaschine kompensiert wird.

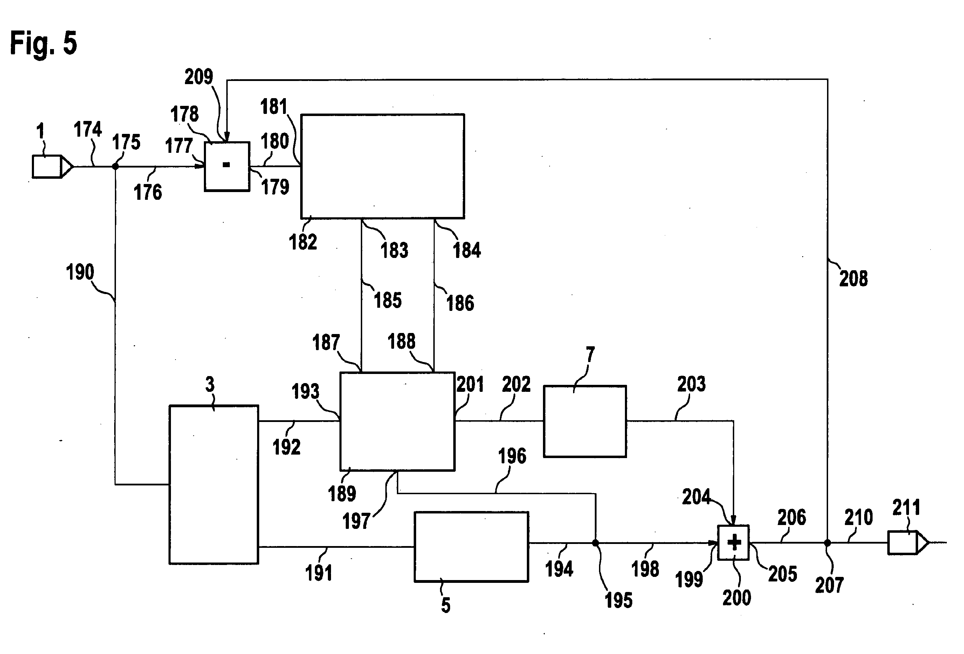

Figur 5 stellt ein weiteres Ausführungsbeispiel für die Erfindung dar, bei dem der erlaubte Antriebs-Ist-Drehmomentbereich durch eine maximale und minimale Grenze (trqLimGradMax und trqLimGradMin) für den Gradienten (erste Ableitung) des Verlaufs eines Antriebs-Ist-Drehmomentes 211 (trq) festgelegt werden. Dabei wird ebenfalls ein PT1-Verhalten zugrundegelegt. Die Figur 5 zeigt das Element 1, welches das Antriebs-Soll-Drehmoment (trqDes) vorgibt, -bekannt aus Figur 1-, welches über eine Verbindung 174 mit einer Verzweigung 175 verbunden ist. Von der Verzweigung 175 führt eine Verbindung 176 zu einem Eingang 177 eines Subtrahierers 178, in dem von dem Antriebs-Soll-Drehmoment (trqDes) das Antriebs-Ist-Drehmoment (trq) abgezogen wird. Von einem Ausgang 179 des Subtrahierers 178 führt eine Verbindung 180 zu einem Eingang 181 eines Elementes 182, in dem erlaubte Änderungen trqMaxDelta und trqMinDelta für das Antriebs-Ist-Drehmoment 211 zwischen zwei Abtastschritten aus den Grenzen für den erlaubten Gradienten (erste Ableitung) des Antriebs-Ist-Drehmomentes 211 durch Multiplikation mit der Größe dT, die die Abtastzeit (Abtastperiodendauer, Zeit zwischen zwei Berechnungszyklen) kennzeichnet, berechnet worden. Die Grenzen trqLimGradMax und trqLimGradMin für den erlaubten Gradienten (erste Ableitung) des Antriebs-Ist-Drehmoments 211 werden im Sinne eine PT1-Verhaltens aus der Differenz zwischen Antriebs-Soll-Drehmoment (trqDes) und Antriebs-Ist-Drehmoment (trq), die am Ausgang 179 des Subtrahierers 178 anliegt, ermittelt. Die erlaubten Änderungen trqMaxDelta und trqMinDelta werden durch zwei Ausgänge 183 und 184 des Elements 182 über jeweils eine Verbindung 185 und 186 zu zwei Eingängen 187 und 188 eines Elementes 189 geleitet. Dabei gilt zum Beispiel für ein ansteigendes Antriebs-Ist-Drehmoment 211 (trq):

$$\text{trqLimGradMin} \leq d(trq) / dt \leq \text{trqLimGradMax}$$

Mit:

   trqLimGradMax = (trqDes - -trq) / (TPT1_Fast)
   trqLimGradMin = (trqDes - trq) / (TPT1_Slow)

Von der Verzweigung 175 führt eine weitere Verbindung 190 zu dem aus Figur 1 bekannten Steuergerät 3, von dem eine Verbindung 191 zu der aus Figur 1 bekannten Verbrennungskraftmaschine 5 und eine weitere Verbindung 192 zu einem weiteren Eingang 193 des Elementes 189 führt. Von der Verbrennungskraftmaschine 5 führt eine Verbindung 194 zu einer Verzweigung 195, von der eine Verbindung 196 zu einem weiteren Eingang 197 des Elements 189 und eine weitere Verbindung 198 zu einem Eingang 199 eines Addierers 200 führt. Im Element 189 wird unter Einbeziehung von einer Ist-Drehmoment-Änderuhg der Verbrennungskraftmaschine 5 zwischen zwei Abtastungen, mittels trqMaxDelta und trqMinDelta aus Element 182 die Änderung des Soll-Drehmoments 16 der elektrischen Maschine 7 zwischen zwei Abtastungen limitiert.

Von einem Ausgang 201 des Elementes 189 wird das limitierte Soll-Drehmoment der elektrischen Maschine 7 über eine Verbindung 202 zu der elektrischen Maschine 7 geführt, von der eine weitere Verbindung 203 das Ist-Drehmoment der elektrischen Maschine 7 zu einem weiteren Eingang 204 des Addierers 200 führt, in dem die Drehmomente der elektrischen Maschine 7 und der Verbrennungskraftmaschine 5 addiert werden. Von einem Ausgang 205 des Addierers 200 führt eine Verbindung 206 zu einer Verzweigung 207, von der eine Verbindung 208 das Antriebs-Ist-Drehmoment 211 als Subtrahent zu einem weiteren Eingang 209 des Subtrahierers 178 führt und als Ausgangsgröße über eine Verbindung 210 an der Verzweigung 207 angeordnet ist.

Auch bei diesem Ausführungsbeispiel verhält sich das Ist-Drehmoment von dem Steuergerät 3 vorgegebenen zum Soll-Drehmoment der elektrischen Maschine wie in Figur 4 dargestellt, indem das Ist-Drehmoment durch die Limitierung zunächst ansteigt und sich erst danach an das Soll-Drehmoment annähert. Ebenso verhält sich das Antriebs-Ist-Moment 211 des gesamten Antriebsstrangs ähnlich wie das in Figur 3 dargestellte Antriebs-Ist-Drehmoment 167. Auch hier wird ein Unterschwinger vermieden durch ein zusätzliches Drehmoment von der elektrischen Maschine 7. Dieses Verfahren auf Basis der Gradienten eignet sich besonders in Verbindung mit einer Führungsformung zur Lastschlagentdämpfung. Bei einer entsprechenden Führungsformung wird der Gradient des Antriebs-Ist-Drehmoments 211 im Bereich des Nulldurchgangs begrenzt (zum Beispiel beim Übergang von Schub- in Zugbetrieb).

**Patentansprüche**

1.   Verfahren zum Betreiben einer Antriebsvorrichtung eines Hybridfahrzeugs, insbesondere eines Hybridkraftfahrzeugs, mit mindestens einer Verbrennungskraftmaschine und mindestens einer elektrischen Maschine, wobei eine Aufteilung einer Antriebsmoment-Anforderung des Fahrers auf die Verbrennungskraftmaschine und die elektrische Maschine erfolgt, wobei sich die Drehmomente von Verbrennungskraftmaschine und elektrischer Maschine zu einem Antriebs-Istdrehmoment addieren, wobei ein gegenüber einer Anforderung von der Verbrennungskraftmaschine aufgrund von systembedingter Verbrennungskraftmaschinenträgheit in der Momentenansteuerung nicht erbringbares Drehmoment / erbringbarer Drehmomentanteil von einem von der elektrischen Maschine gelieferten Drehmoment / Drehmomentanteil mindestens teilweise kompensiert wird, **dadurch gekennzeichnet, dass** in Abhängigkeit der Antriebsmoment-Anforderung des Fahrers ein erlaubter Bereich für das Antriebs-Istdrehmoment der

**EP 1 984 199 B1**

Antriebsvorrichtung in Abhängigkeit von mindestens einem Parameter vorgegeben wird und dass die elektrische Maschine bei einem Verlassen des erlaubten Bereichs des Antriebs-Istdrehmoments einen zusätzlichen Drehmomentbeitrag liefert, damit das Antriebs-Istdrehmoment wieder in den erlaubten Bereich gelangt.

2. Verfahren nach Anspruch 1, **dadurch gekennzeichnet, dass** der erlaubte Bereich für das Antriebs-Istdrehmoment so vorgegeben wird, dass Schwingungsanregungen eines Antriebsstrangs des Hybridfahrzeugs vermieden werden.

3. Verfahren nach einem der vorhergehenden Ansprüche, **dadurch gekennzeichnet, dass** die Leistung der elektrischen Maschine zur Verringerung von bei ihrem Betrieb entstehenden Umwandlungsverlusten begrenzt vorgegeben wird.

4. Verfahren nach einem der vorhergehenden Ansprüche, **dadurch gekennzeichnet, dass** mindestens eine Bereichsgrenze des erlaubten Bereichs für das Antriebs-Istdrehmoment durch die begrenzt vorgegebene Leistung der elektrischen Maschine beeinflusst wird.

5. Verfahren nach einem der vorhergehenden Ansprüche, **dadurch gekennzeichnet, dass** in Abhängigkeit der Antriebsmoment-Anforderung des Fahrers ein erlaubter Bereich für den Gradienten des Antriebs-Istdrehmoments in Abhängigkeit von mindestens einem Parameter vorgegeben wird.

6. Verfahren nach einem der vorhergehenden Ansprüche, **dadurch gekennzeichnet, dass** der Parameter von einem Geschwin-digkeitsregelsystem (Tempomat) und/oder Abstandsregelsystem und/oder der Geschwindigkeit und/oder der Drehzahl des Verbrennungsmotors und/oder von einem ESP/ASR/ABS-System und/oder einer individuellen Fahrereinstellung abhängig ist.

7. Vorrichtung zum Betreiben einer Antriebsvorrichtung eines Hybridfahrzeugs, insbesondere eines Hybridkraftfahrzeugs, mit mindestens einer Verbrennungskraftmaschine und mindestens einer elektrischen Maschine, wobei eine Aufteilung einer Antriebsmoment-Anforderung des Fahrers auf die Verbrennungskraftmaschine und die elektrische Maschine erfolgt, wobei sich die Drehmomente von Verbrennungskraftmaschine und elektrischer Maschine zu einem Antriebs-Istdrehmoment addieren, wobei Mittel vorgesehen sind, welche die elektrische Maschine derart ansteuern, dass ein gegenüber einer Anforderung von der Verbrennungskraftmaschine aufgrund von systembedingter Verbrennungskraftmaschinenträgheit in der Momentenansteuerung nicht erbringbares Drehmoment / erbringbarer Drehmomentanteil von einem von der elektrischen Maschine gelieferten Drehmoment / Drehmomentanteil mindestens teilweise kompensiert wird, **dadurch gekennzeichnet, dass** in Abhängigkeit der Antriebsmoment-Anforderung des Fahrers ein erlaubter Bereich für das Antriebs-Istdrehmoment der Antriebsvorrichtung In Abhängigkeit von mindestens einem Parameter vorgegeben wird und dass die elektrische Maschine bei einem Verlassen des erlaubten Bereichs des Antriebs-Istdrehmoments einen zusätzlichen Drehmomentbeitrag liefert, damit das Antriebs-Istdrehmoment wieder in den erlaubten Bereich gelangt.

**Claims**

1. Method for operating a drive apparatus of a hybrid vehicle, in particular of a hybrid motor vehicle, having at least one internal combustion engine and at least an electric machine, wherein a drive torque request by the driver is divided between the internal combustion engine and the electric machine, wherein the torques of the internal combustion engine and the electric machine are added to form a drive actual torque, wherein a torque/torque component which cannot be produced in response to a request by the internal combustion engine owing to system-related internal combustion engine inertia in the torque actuation is at least partially compensated by a torque/torque component which is supplied by the electric machine, **characterized in that**, depending on the drive torque request of the driver, a permitted range for the drive actual torque of the drive device is predefined as a function of at least one parameter, and **in that** when the permitted range of the drive actual torque is exited the electric machine supplies an additional torque contribution so that the drive actual torque returns to the permitted range.

2. Method according to Claim 1, **characterized in that** the permitted range is predefined for the drive actual torque in such a way that vibration excitations of a drivetrain of the hybrid vehicle are avoided.

3. Method according to one of the preceding claims, **characterized in that** the power of the electric machine is predefined in a limited fashion in order to reduce conversion losses occurring during operation of said electric machine.

7

4. Method according to one of the preceding claims, **characterized in that** at least one limit to the range permitted for the drive actual torque is influenced by the power of the electric machine which is predefined in a limited fashion.

5. Method according to one of the preceding claims, **characterized in that**, depending on the drive torque request by the driver, a permitted range for the gradients of the drive actual torque is predefined as a function of at least one parameter.

6. Method according to one of the preceding claims, **characterized in that** the parameter is dependent on a speed control system (cruise control system) and/or adaptive cruise control system and/or the speed and/or the rotational speed of the internal combustion engine and/or on an ESP/traction controller/ABS system and/or an individual driver setting.

7. Apparatus for operating a drive apparatus of a hybrid vehicle, in particular of a hybrid motor vehicle, having at least one internal combustion engine and at least an electric machine, wherein a drive torque request by the driver is divided between the internal combustion engine and the electric machine, wherein the torques of the internal combustion engine and the electric machine are added to form a drive actual torque, wherein means are provided which actuate the electric machine in such a way that a torque/torque component which cannot be produced in response to a request by the internal combustion engine owing to system-related internal combustion engine inertia in the torque actuation is at least partially compensated by a torque/torque component which is supplied by the electric machine, **characterized in that**, depending on the drive torque request of the driver, a permitted range for the drive actual torque of the drive device is predefined as a function of at least one parameter, and **in that** when the permitted range of the drive actual torque is exited the electric machine supplies an additional torque contribution so that the drive actual torque returns to the permitted range.

**Revendications**

1. Procédé de fonctionnement d'un dispositif d'entraînement d'un véhicule hybride, en particulier d'un véhicule automobile hybride, comprenant au moins un moteur à combustion interne et au moins une machine électrique, une division d'une demande de couple d'entraînement par le conducteur se produisant entre le moteur à combustion interne et la machine électrique, les couples du moteur à combustion interne et de la machine électrique s'ajoutant pour donner un couple d'entraînement instantané, un couple ne pouvant pas être réalisé / un couple partiel pouvant être réalisé dans la commande de couple par le moteur à combustion interne en fonction d'une demande en raison de l'inertie du moteur à combustion interne due au système étant compensé au moins en partie par un couple / un couple partiel fourni par la machine électrique, **caractérisé en ce que**, en fonction de la demande de couple d'entraînement par le conducteur, une plage autorisée pour le couple d'entraînement instantané du dispositif d'entraînement est prédéfinie en fonction d'au moins un paramètre, et **en ce que** la machine électrique, en cas d'écart hors de la plage autorisée du couple d'entraînement instantané, fournit une contribution supplémentaire au couple, afin que le couple d'entraînement instantané revienne à nouveau dans la plage autorisée.

2. Procédé selon la revendication 1, **caractérisé en ce que** la plage autorisée pour le couple d'entraînement instantané est prédéfinie de telle sorte que des excitations d'oscillations d'une chaîne cinématique du véhicule hybride soient évitées.

3. Procédé selon l'une quelconque des revendications précédentes, **caractérisé en ce que** la puissance de la machine électrique est prédéfinie de manière limitée pour réduire des pertes par conversion produites lors de son fonctionnement.

4. Procédé selon l'une quelconque des revendications précédentes, **caractérisé en ce qu'**au moins une limite de plage de la plage autorisée pour le couple d'entraînement instantané est influencée par la puissance prédéfinie de manière limitée de la machine électrique.

5. Procédé selon l'une quelconque des revendications précédentes, **caractérisé en ce que**, en fonction de la demande de couple d'entraînement par le conducteur, une plage autorisée pour le gradient du couple d'entraînement instantané est prédéfinie en fonction d'au moins un paramètre.

6. Procédé selon l'une quelconque des revendications précédentes, **caractérisé en ce que** le paramètre est dépendant d'un système de régulation de la vitesse (Tempomat) et/ou d'un système de régulation de distance et/ou de la vitesse et/ou du régime du moteur à combustion interne et/ou d'un système ESP/ASR/ABS et/ou d'un ajustement individuel par le conducteur.

7. Dispositif de fonctionnement d'un dispositif d'entraînement d'un véhicule hybride, en particulier d'un véhicule automobile hybride, comprenant au moins un moteur à combustion interne et au moins une machine électrique, une division d'une demande de couple d'entraînement par le conducteur se produisant entre le moteur à combustion interne et la machine électrique, les couples du moteur à combustion interne et de la machine électrique s'ajoutant pour donner un couple d'entraînement instantané, des moyens étant prévus, lesquels commandent la machine électrique de telle sorte qu'un couple ne pouvant pas être réalisé / un couple partiel pouvant être réalisé dans la commande de couple par le moteur à combustion interne en fonction d'une demande en raison de l'inertie du moteur à combustion interne due au système soit compensé au moins en partie par un couple / un couple partiel fourni par la machine électrique, **caractérisé en ce que**, en fonction de la demande de couple d'entraînement par le conducteur, une plage autorisée pour le couple d'entraînement instantané du dispositif d'entraînement est prédéfinie en fonction d'au moins un paramètre, et **en ce que** la machine électrique, en cas d'écart hors de la plage autorisée du couple d'entraînement instantané, fournit une contribution supplémentaire au couple, afin que le couple d'entraînement instantané revienne à nouveau dans la plage autorisée.

**Fig. 1**

EP 1 984 199 B1

Fig. 2

EP 1 984 199 B1

# Fig. 3

# Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10201264 A1
- EP 1270301 A